# EUROPÄISCHE PATENTANMELDUNG

(11) **EP 1 188 623 A2**
(43) Veröffentlichungstag der Anmeldung: **20.03.2002**
(21) Anmeldenummer: 01120218.1
(22) Anmeldetag: 23.08.2001
(51) Int. Cl.: B60R 21/18, B60R 21/16

(54) **Airbagmodul mit einem Luftsack der die Verlagerung des Kopfes verhindert**

(30) Priorität: 19.09.2000 DE 10046222
(71) Anmelder: Bayerische Motoren Werke Aktiengesellschaft, 80809 München (DE)
(72) Erfinder: Sertl, Hans-Peter, 9547 Kemnath (DE); Taubenberger, Josef, 83052 Bruckmühl (DE); Schaper, Jens, Dr., 80335 München (DE); Meister, Markus, 81245 München (DE)

(57) **Zusammenfassung**

Es wird ein Airbagmodul mit einem Luftsack beschrieben, der sich seitlich des Kopfes eines Fahrzeuginsassen im Falle eines Seitenaufpralls entfaltet und die Verlagerung des Kopfes verhindert. In dem Airbagmodul, das sich gegenüber dem Kopf des Fahrzeuginsassen etwas zurückversetzt befindet, ist der Luftsack so in einer Schutzhülle verpackt, dass er sich im Auslösefall zunächst nach vorne in Fahrtrichtung entfaltet. Erreicht wird diese durch eine mäanderartige Faltung des Luftsacks um einen Zuführschlauch des Gasstromes.

## Beschreibung

Die Erfindung bezieht sich auf ein Airbagmodul mit einem Luftsack, wie es im Oberbegriff des Hauptanspruchs beschrieben ist.

Die deutsche Patentanmeldung 100 26 024 zeigt eine solche Anordnung. Der Luftsack befindet sich hier am oberen Abschnitt eines als Diagonalgurt ausgelegten Sicherheitsgurtes und schützt im aufgeblasenem Zustand den Kopf und Schulterbereich des Fahrzeuginsassen. Zum Aufblasen ist im Airbagmodul ein Zuführschlauch vorgesehen, der von einem außerhalb des Airbagmoduls befindlichen Gasgenerator versorgt wird.

Ein Airbag an dieser Stelle erlaubt einerseits einen Seitenschutz auch bei offenen Fahrzeugen, wie z. B. Cabrios, andererseits kann er im nicht aktiviertem Zustand zu Komforteinbußen führen. Es wird daher angestrebt, das Airbagmodul möglichst weit weg vom Hals den Fahrzeuginsassen nach hinten in Richtung Rücklehne des Fahrzeugsitzes zu verlagern. Jedoch muss in jedem Fall sichergestellt sein, dass sich der Luftsack zwischen der Seitenwand der Fahrzeugkarosserie und dem Kopf-Schulterbereichs entfaltet.

Aufgabe der Erfindung ist es, bei einem gattungsgemäßen Airbagmodul den Luftsack so zu falten, dass das Airbagmodul möglichst wenig störend am Sicherheitsgurt angeordnet werden kann, andererseits aber ein ausreichender Schutz für den Fahrzeuginsassen sicherstellt.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist der Luftsack so gefaltet, dass er sich anfänglich nach vorne in Richtung des zu schützenden Kopf-Schulter-Bereichs entfaltet. Weiter erlaubt die Erfindung, den Zuführschlauch bis an den vorderen Teil des gepackten Luftsacks einzuführen. Auf diese Weise und durch die besondere Art der Faltung, einer Art Stülpfaltung, zieht der Gasstrom den Luftsack Falte um Falte aus der Umhüllung heraus. Der Luftsack wird so erst in seiner ganzen Länge herausgezogen, bevor er seine endgültige gefüllte Form einnimmt. Bei herkömmlichen Airbagmodulen befindet sich demgegenüber die Auftrittsöffnung des Gasstromes in der Regel hinter dem gepackten Luftsack; er wird demnach vom Gasstrom herausgeschoben und in schwer kontrollierbarer Weise aufgeblasen. Schließlich verringert das erfindungsgemäße Herausziehen die Aggressivität (Entfaltungsgeschwindigkeit) des Luftsacks.

Um sicher zu stellen, dass durch das einströmende heiße Gas das Gewebe des Luftsackes nicht beschädigt wird, ist es zweckmäßig, an der Austrittsstelle eine zusätzliche Gewebelage vorzusehen.

Durch die Art der erfindungsgemäßen Faltung lässt sich das Öffnungsverhalten noch weiter beeinflussen. So kann in einer zweckmäßigen Ausgestaltung der Luftsack zu einem einzigen Paket gefaltet sein. In diesem Fall ist es vorteilhaft, einen Abschnitt der innersten Falte vor der Mündungsöffnung des Zuführschlauchs zu legen.

In einer weiteren vorteilhaften Ausführung besteht der gefaltete Luftsack aus zwei Teilpaketen. Beim Aufblasen entfaltet sich zunächst das erste Teilpaket und anschließend das zweite. Die Falten der Teilpakete können, ebenso wie bei einem einzelnen Paket, gleich oder unterschiedlich lang sein.

Das erfindungsgemäße Airbagmodul kann in besonderem Maße für Fahrzeugsitze mit integriertem Gurtsystem eingesetzt werden, bei dem sich alle Gurtverankerungspunkte im oder am Sitz befinden. Die Erfindung ist jedoch darauf nicht beschränkt. Sie eignet sich vielmehr ganz allgemein für alle Arten von Fahrzeugen sowohl für die vorderen als auch die hinteren Sitzen. Ebenso erlaubt sie die Verwendung von Kindersitzen.

Weitere vorteilhafte Ausgestaltungen der Erfindung ergeben sich aus der nachfolgenden Beschreibung anhand der dazugehörenden Zeichnung. Es zeigen
- Fig. 1: in schematischer Darstellung, den Oberkörper eines Fahrzeuginsassen mit einem seitlichen, aufgeblasenen Luftsack,
- Fig. 2: eine schematische Seitenansicht eines Fahrzeugsitzes mit einem nicht aktivierten, erfindungsgemäßen Airbagmodul,
- Fig. 3: in vergrößertem Maßstab und schematisch das Airbagmodul mit einer ersten Ausführung der Luftsackfaltung,
- Fig. 4: den vorderen Abschnitt einer Schutzhülle für den Luftsack und
- Fig. 5: das Airbagmodul mit einer zweiten Ausführung der Luftsackfaltung.

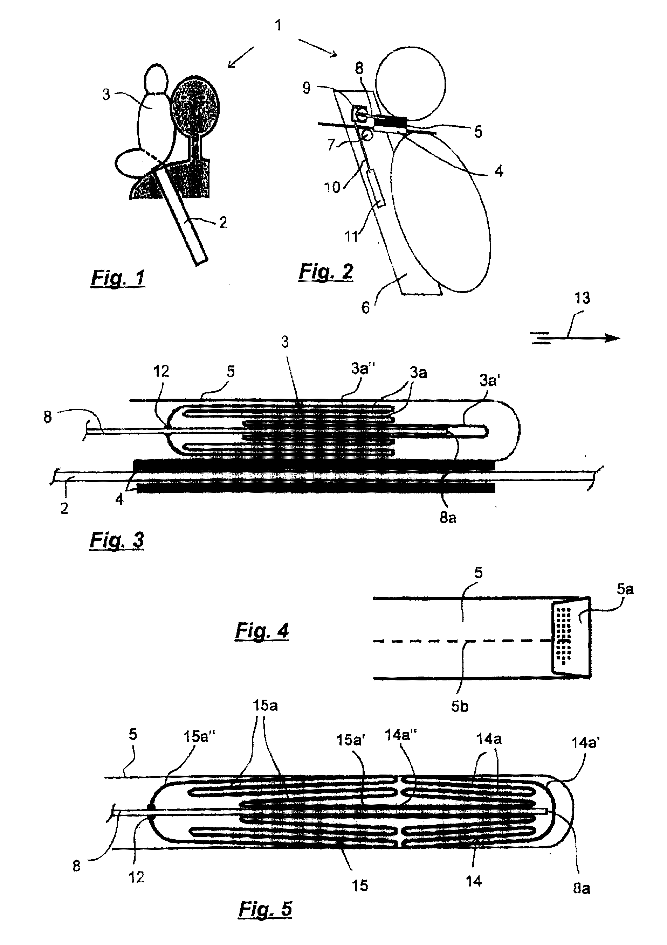

Bei der in Figur 1 schematisch dargestellten Person handelt es sich um den Insassen 1 eines Kraftfahrzeuges. Es sind Schulter- und Kopfbereich erkennbar, sowie ein über den Brustbereich verlaufendes Gurtband 2 eines nicht weiter dargestellten Dreipunkt-Sicherheitsgurtes. Ein aufgeblasener Luftsack 3 liegt auf der Schulter des Insassen auf und stützt dessen Kopf. Er schützt des Weiteren diese Köperteile gegen benachbarte, nicht gezeichnete Karosserieteile, die bei einem Seitencrash eindringen können.

Der Luftsack 3 ist Teil eines Airbagmoduls, das nach Fig. 2 neben dem Luftsack im wesentlichen aus einem Gurtführungskanal 4 und einer den zusammengefalteten Luftsack aufnehmenden Schutzhülle 5 besteht. Dabei befindet sich das Airbagmodul im Bereich der Oberkante einer Sitzlehne 6, die zu einem nicht näher dargestellten Fahrzeugsitz gehört. Nicht erkennbar, aber der Vollständigkeit halber erwähnt, ist der Fahrzeugsitz mit einem integrierten Sicherheitsgurtsystem ausgerüstet. Bei einem solchen Gurtsystem läuft das Gurtband von einem unteren, im Bereich eines Sitzkissens vorgesehenen Verankerungspunkt nach oben zu einer Umlenkung und von dort durch die Rücklehne zurück zu einem Gurtaufroller. In Fig. 2 ist die Umlenkung als Gurtführung 7 angedeutet. Eine Schlosszunge, durch die das Gurtband hindurchgeschleift ist, lässt sich in einem Gurtschloss auf der gegenüberliegenden Seite des Sitzkissens verankern.

Das Gurtband 2 läuft - von dem Brustbereich des Fahrzeuginsassen kommend - durch den Gurtführungskanal 4 zu der Gurtführung 7. Dort wird es normalerweise nach unten umgelenkt, jedoch aus Gründen der Übersichtlichkeit erstreckt es sich in der vorliegenden Darstellung geradlinig nach hinten. Das Airbagmodul aus Gurtführungskanal 4, Luftsack und Schutzhülle 5 ist über einen Zuführschlauch 8 mit einem Kugelgelenk 9 verbunden. Der Zuführschlauch 8 mündet dabei in eine Kammer des Kugelgelenks, die darüber hinaus von einer Zuleitung 10 eines in der Sitzlehne vorgesehenen Gasgenerator gespeist wird.

Wird durch einen nicht näher dargestellten Sensor ein Seitenaufprall erkannt, zündet der Gasgenerator 11 und über diese Zuleitung 10 strömt Gas in die Kammer und von dort über den Zuführschlauch 8 in den Gassack hinein. Der Gassack wird aufgeblasen und nimmt seine in Fig. 1 gezeigte Form an.

In Fig. 3 ist das längliche Airbagmodul mit dem gefalteten Luftsack 3 und der Schutzhülle 5 in vergrößertem Maßstab erkennbar. Der Zuführschlauch 8 dringt- in Längsrichtung gesehen - weit in das Modul ein, und in mäanderförmigen Falten 3a ist der Luftsack 3 um ihn herum gepackt. Dies kann in symmetrischer oder sonstiger geeigneter Anordnung sein. Die innerste Falte 3a' liegt dabei mit einem Endabschnitt vor einer Mündungsöffnung 8a des Zuführschlauchs 8. Im übrigen erstreckt sich diese Falte 3a' in unmittelbarer Nachbarschaft entlang einer Teillänge des Zuführschlauchs 8 nach hinten und setzt sich mäanderartig in übereinanderliegenden weiteren Falten 3a fort. Die Längen der Falten variieren und sind insbesondere im mittleren Packungsbereich kürzer. Die der Schutzhülle 5 zugekehrten äußerste Endfalte 3a" schließlich führt mit einem Endabschnitt zu einem rückwärtigen Abschnitt des Zuführschlauchs 8 und ist dort bei 12 an diesem befestigt. Die Schutzhülle 5 selbst ist mit dem Gurtführungskanal 4 festverbunden.

Beim Auslösen des Airbags strömt das vom Generator erzeugt Gas aus der Mündungsöffnung 8a des Zuführschlauchs 8 und drückt die innerste Falte 3a' nach vorne, d.h. in die mit einem Pfeil 13 angedeutete Fahrtrichtung. Sie reißt dabei eine vernähte Kappe 5a (Fig. 4) auf und tritt ins Freie. Sobald die Kappe 5a öffnet, bricht die Schutzhülle 5 entlang einer längs verlaufenden Aufreißnaht 5b weiter auf. Der Luftsack wird durch den Gasstrom nun Falte um Falte aus der Schutzhülle herausgezogen und schließlich zu seiner endgültigen Form aufgeblasen.

In einer zweiten Ausführung ist der Luftsack nach Fig. 5 in Längsrichtung des Zuführschlauchs in zwei miteinander verbundene Paketabschnitte 14, 15 gefaltet. Eine äußerste Falte 14a' eines ersten, vorne liegenden Paketabschnitts 14 liegt mit einem Endabschnitt wiederum vor der Mündungsöffnung 8a des Zuführschlauchs 8. Von dort verläuft sie entlang einer Teillänge des Zuführschlauchs in unmittelbarer Nachbarschaft zur Schutzhülle 5 und setzt sich dann radial einwärts in mäanderförmig untereinanderliegende Falten 14a fort bis zu einer inneren, auf dem Zuführschlauchs liegenden Falte 14a". Die Verlängerung der Falte 14a" bildet eine Eingangsfalte 15a', die ebenfalls auf dem Zuführschlauch 8 liegt und den Anfang eines zweiten hinteren Paktabschnitts 15 bildet. Die Falte 15a' setzt sich in mäanderförmige übereinanderliegende weitere Falten 15a fort bis zu einer der Schutzhülle 5 zugekehrten äußeren Endfalte 15a", der wiederum bei 12 mit dem Zuführschlauch verbunden ist. Schließlich sind die Falten des Faltenpakets 14 - in Längsrichtung des Zuführschlauchs gesehen - kürzer als die Falten des Faltenpakets 15.

Beim Auslösen des Airbags wird in analoger Weise wie bei der Ausführung nach Fig. 3 der Luftsack aus der Schutzhülle 5 gezogen mit dem Unterschied, dass zunächst Falte um Falte des ersten Pakets 14 und dann die Falten des zweiten Pakets 15 herausgezogen werden.

## Patentansprüche

1. Airbagmodul mit einem Luftsack, der im deaktivierten Zustand in einer Schutzhülle zusammengefaltet liegt und der beim Auslösen der Airbageinheit über einen Zuführschlauch von einem durch einen aktivierten Gasgenerator erzeugten Gasstrom aufgeblasen wird, **dadurch gekennzeichnet, daß** der Luftsack (3) symmetrisch um den Zuführschlauch (8) herum in mäanderförmige Falten so gepackt ist, dass sich ein Abschnitt des Luftsackgewebes vor einer Austrittsöffnung (8a) des Zuführschlauchs (8) befindet und dass beim Entfalten des Luftsacks (3) die einzelnen Falten nacheinander in Achsrichtung des Zuführschlauchs (8) aufgezogen werden.

2. Airbagmodul nach Anspruch 1, **dadurch gekennzeichnet, dass** eine innerste Falte (3a') des Luftsackes (3) von dem vor der Austrittsöffnung (8a) des Zuführschlauchs (8) befindlichen Abschnitt ausgehend in unmittelbarer Nachbarschaft und entlang einer Teillänge des Zuführschlauchs (8) verläuft und dass sich an die innerste Falte (3a') übereinanderliegend weitere Falten (3a) mäanderartig nach außen fortsetzen bis zu einer der Schutzhülle (5) zugekehrten äußeren Endfalte (3a"), die wiederum mit dem Zuführschlauch (8) verbunden ist.

3. Airbagmodul nach Anspruch 2, **dadurch gekennzeichnet, dass** die Falten des Luftsackes (3) in Längsrichtung des Zuführschlauches (8) gesehen unterschiedliche Längen haben.

4. Airbagmodul nach Anspruch 1, **dadurch gekennzeichnet, dass** der Luftsack (3) in Längsrichtung des Zuführschlauches (8) gesehen in zwei miteinander verbundene Paketabschnitte (14, 15) gefaltet ist.

5. Airbagmodul nach Anspruch 4, **dadurch gekennzeichnet, dass** bei einem erster Paketabschnitt (14) eine äußere Falte (14a') mit einem Endabschnitt vor der Austrittsöffnung (8a) des Zuführschlauchs (8) liegt und von dort entlang einer Teillänge des Zuführschlauchs (8) in Nachbarschaft zur Schutzhülle (5) verläuft und sich einwärts in mäanderförmig untereinanderliegende, weitere Falten (14a) fortsetzt bis zu einer inneren, sich in unmittelbarer Nachbarschaft zu dem Zuführschlauch (8) befindlichen Falte (14a"), die in eine Eingangsfalte (15a') eines zweiten Paktabschnitts (15) übergeht, und dass der zweite Paketabschnitt (15) am Zuführschlauch (8) festgelegt ist.

6. Airbagmodul nach Anspruch 5, **dadurch gekennzeichnet, dass** die Eingangsfalte (15a') des zweiten Paketabschnitts (15) in unmittelbarer Nachbarschaft und entlang einer Teillänge des Zuführschlauchs (8) verläuft und sich in mäanderförmig übereinanderliegende, weitere Falten (15a) fortsetzt bis zu einer in Nachbarschaft zur Schutzhülle (5) liegenden, äußeren Endfalte (15a"), die wiederum mit dem Zuführrohr (8) verbunden ist.

7. Airbagmodul nach Anspruch 5 oder 6, **dadurch gekennzeichnet, dass** die beiden Paketabschnitte (14, 15) in Längsrichtung des Zuführschlauches (8) gesehen unterschiedliche Längen aufweisen.

8. Airbagmodul nach einem der Ansprüche 1 bis 7, **dadurch gekennzeichnet, dass** die Schutzhülle (5) länglich ausgeführt ist mit einer Aufreißöffnung im Austrittsbereich des Luftsacks (3).

9. Airbagmodul nach Anspruch 8, **dadurch gekennzeichnet, dass** die Aufreißöffnung gebildet wird durch eine im Stirnbereich vernähte Kappe (5a) und einer entlang der Längsausdehnung der Schutzhülle verlaufenden Aufreißnaht (5b).

10. Airbagmodul nach einem der Ansprüche 1 bis 9, **dadurch gekennzeichnet, dass** der Luftsack (3) im Bereich der Austrittsöffnung (8a) des Zuführschlauchs (8) eine Verstärkungseinlage aufweist.

11. Airbagmodul nach einem der Ansprüche 1 bis 10, das einem Sicherheitsgurt eines Kraftfahrzeuges im Schulter-Kopf-Bereich des Fahrzeuginsassen zugeordnet ist, wobei das Gurtband von einem hinter dem Schulter-Kopf-bereich liegenden Umlenk- oder Befestigungspunkt kommend über die Schulter des Fahrzeuginsassen und von dort über den Brustbereich schräg nach unten verläuft, **dadurch gekennzeichnet, dass** das Airbagmodul in seiner länglichen Ausrichtung dem Verlauf des Gurtbandes (2) über die Schulter folgt, und dass der Luftsack (3) sich anfänglich im wesentlichen in Fahrtrichtung (13) entfaltet.
